# DEMANDE DE BREVET EUROPEEN

(11) **EP 1 588 870 A1**
(43) Date de publication de la demande: **26.10.2005**
(21) Numéro de dépôt: 05290733.4
(22) Date de dépôt: 04.04.2005
(51) Int. Cl.: B60C 15/032

(54) **Appui de sécurité pour roue de véhicule**

(30) Priorité: 21.04.2004 FR 0404208
(71) Demandeur: Société de Technologie Michelin, 63000 Clermont-Ferrand (FR); MICHELIN RECHERCHE ET TECHNIQUE S.A., 1763 Granges-Paccot (CH)
(72) Inventeur: Clouet, Alain, 63270 Saint-Maurice (FR)
(74) Mandataire: Laget, Jean-Loup

(57) **Abrégé**

Dans cet appui de sécurité comprenant un anneau segmenté (6), dont les segments (6a, ... 6f) sont reliés par des moyens de liaison (9), au moins un desdits moyens de liaison (9) comprenant au moins un élément mâle (26) et au moins une partie femelle (27) aptes à s'emboîter l'un dans l'autre par un déplacement relatif de deux segments dans le sens circonférentiel de l'anneau, ledit au moins un moyen de liaison (9) comprend en outre des moyens de rapprochement aptes à rapprocher les deux extrémités mutuellement en regard des deux segments (6a, 6f) quand ledit élément mâle (26) est partiellement engagé dans ladite partie femelle (27), et en réponse à un déplacement axial dudit anneau (6) par rapport à la jante (2).

## Description

La présente invention concerne un appui de sécurité pour roue de véhicule, c'est-à-dire un appui permettant de supporter au moins partiellement une bande de roulement d'un pneumatique dans des conditions de pression faible ou nulle.

La présente invention concerne plus particulièrement un appui de sécurité du type comprenant un anneau qui est destiné à être monté sur une jante d'une roue à l'intérieur d'un pneumatique et qui est subdivisé en au moins deux segments arqués ayant des extrémités qui se font mutuellement face, et plusieurs moyens de liaison qui relient chacun deux extrémités mutuellement en regard de deux segments de l'anneau, au moins un desdits moyens de liaison comprenant au moins un élément mâle à une extrémité d'un segment et au moins une partie femelle à une extrémité d'un autre segment et apte à recevoir ledit élément mâle par un déplacement relatif des deux segments l'un par rapport à l'autre dans le sens circonférentiel de l'anneau. Un appui de sécurité connu de ce type est par exemple décrit dans le document EP-A-0 798 141.

Par rapport aux appuis de sécurité dont l'anneau est réalisé d'une seule pièce, les appuis de sécurité du type à anneau segmenté offre l'avantage de pouvoir être monté sur une jante à gorge de montage usuelle, donc de ne pas nécessiter une géométrie de jante spéciale (du type PAX par exemple) ou une jante en deux parties, comme celle montrée sur la figure 3 du document EP-A-0 834 407.

Par contre, les appuis de sécurité du type à anneau segmenté ont l'inconvénient que leur montage sur une jante de roue et leur démontage par rapport à ladite jante de roue sont relativement compliqués et longs à mettre en oeuvre. En outre, les appuis de sécurité connus à anneau segmenté nécessitent un outillage spécial pour leur montage/démontage par rapport à la jante, en particulier pour le serrage et le desserrage des segments de l'anneau.

La présente invention a donc pour but de fournir un appui de sécurité du type à anneau segmenté, qui puisse être monté sur une jante à gorge usuelle de montage et démonté de ladite jante plus facilement et plus rapidement que les appuis de sécurité connus du type à anneau segmenté.

A cet effet, la présente invention a pour objet un appui de sécurité du type à anneau segmenté défini en préambule, caractérisé en ce que ledit au moins un moyen de liaison comprend en outre des moyens de rapprochement aptes à rapprocher les deux extrémités mutuellement en regard des deux segments quand ledit élément mâle est partiellement engagé dans ladite partie femelle, et en réponse à un déplacement axial dudit anneau par rapport à la jante.

Selon un mode de réalisation de l'invention, les moyens de rapprochement comprennent un mécanisme à levier comportant au moins deux biellettes de longueurs différentes qui sont articulées l'une à l'autre et chacune à une extrémité respective des deux segments à relier l'un à l'autre par des axes parallèles à l'axe géométrique de l'anneau, ledit mécanisme à levier agissant de façon à rapprocher l'une de l'autre les deux extrémités mutuellement en regard des deux segments quand ledit élément mâle est partiellement engagé dans ladite partie femelle et quand une articulation commune à deux biellettes du mécanisme à levier est déplacée sensiblement radialement par rapport au centre de l'anneau en réponse audit déplacement axial de l'anneau.

Selon un mode de réalisation de l'invention, dans un état où les extrémités des segments de l'anneau sont écartées l'une de l'autre et l'anneau a un diamètre relativement grand, ladite articulation commune à deux biellettes se trouve dans l'espace intérieur défini par l'anneau.

De préférence, dans un état où les extrémités des segments de l'anneau sont rapprochées l'une de l'autre et l'anneau a un diamètre relativement petit, les biellettes du mécanisme à levier sont entièrement logées dans des fentes formées dans les extrémités mutuellement en regard des deux segments et dans une surface de base desdits segments qui est destinée à venir en contact avec la jante.

De préférence, une des deux biellettes du mécanisme à levier comporte, dans la région de ladite articulation commune, une surface extérieure biseautée de telle façon que lorsque l'anneau est soumis à une force dirigée parallèlement à l'axe géométrique de l'anneau et que ladite surface extérieure biseautée vient en contact avec un flanc d'une gorge d'une jante de roue, ladite articulation commune est soumise à une force tendant à la déplacer radialement vers l'extérieur par rapport au centre de l'anneau.

Dans le cas où les segments de l'anneau de l'appui de sécurité ont un poids relativement élevé, en particulier dans le cas d'un appui de sécurité pour roue de véhicule poids lourd, il est de préférence prévu au moins un élément de maintien apte à maintenir temporairement ledit élément mâle partiellement engagé dans ladite partie femelle tant que ladite articulation commune n'a pas été déplacée radialement pour serrer l'anneau sur une jante de roue.

Dans ce cas, ledit élément de maintien peut être constitué par un clip en matériau à ressort, qui a une forme générale en U, avec deux branches qui ont des parties mutuellement convergentes suivies de parties d'extrémité mutuellement divergentes, et chacun des deux segments reliés par le mécanisme à levier comporte, dans une face latérale, une lumière apte à recevoir une des deux branches du clip.

Dans le cas le plus simple, le mécanisme à levier peut comporter deux biellettes. Cependant, l'invention n'est pas limitée à un appui de sécurité dont le mécanisme à levier comporte deux biellettes, car ce mécanisme peut comporter par exemple trois biellettes, à savoir une première et une deuxième biellette, articulées chacune à une extrémité respective des deux segments à relier l'un à l'autre, et une troisième biellette, plus longue que les première et deuxième biellettes et articulée à celles-ci.

Suivant une variante de réalisation de l'invention, en particulier pour un appui de sécurité destiné à être monté sur une jante d'une roue d'un véhicule léger ou véhicule de tourisme, chaque segment de l'anneau a une surface de base qui est apte à venir en contact avec une surface sensiblement cylindrique d'une jante de roue et l'une de ladite surface de base et de ladite surface sensiblement cylindrique porte au moins une saillie apte à s'encliqueter dans une rainure formée dans l'autre de ladite surface de base et de ladite surface sensiblement cylindrique.

L'invention a également pour objet une roue de véhicule comprenant une jante, un pneumatique et un appui de sécurité présentant une ou plusieurs des caractéristiques susmentionnées.

La roue de véhicule peut en outre comporter, en particulier dans le cas d'une roue dont la jante a une largeur (dimension mesurée parallèlement à l'axe de rotation de la roue) nettement plus grande que la largeur de l'anneau de l'appui de sécurité, en particulier dans le cas d'une roue de véhicule poids lourd, au moins un élément de blocage de talon de pneumatique qui est placé autour de la jante entre une face latérale de l'anneau de l'appui de sécurité et un talon du pneumatique. Dans ce cas, ledit élément de blocage de talon peut avoir la forme d'un anneau à structure tubulaire semi-rigide, qui est muni d'une valve permettant le gonflage de l'anneau à structure tubulaire en présence d'un gaz comprimé dans le pneumatique de la roue, et empêchant le dégonflage dudit anneau à structure tubulaire lorsqu'il se produit une chute rapide de pression dans le pneumatique.

L'invention a encore pour objet un ensemble composé d'une jante de roue et d'un appui de sécurité destiné à être monté sur ladite jante de roue à l'intérieur d'un pneumatique, la jante comprenant notamment une gorge de montage et une surface sensiblement cylindrique ayant un diamètre supérieur au diamètre de la gorge de montage et liée à celle-ci par un flanc incliné, ledit appui étant destiné à supporter au moins partiellement une bande de roulement du pneumatique dans des conditions de pression faible ou nulle et comprenant :
- un anneau qui est subdivisé en au moins deux segments arqués ayant des extrémités qui se font mutuellement face, et
- plusieurs moyens de liaison qui relient chacun deux extrémités mutuellement en regard de deux segments de l'anneau,
   - au moins un desdits moyens de liaison comprenant
      ▷ au moins un élément mâle à une extrémité d'un segment et
      ▷ au moins une partie femelle à une extrémité d'un autre segment et apte à recevoir ledit élément mâle par un déplacement relatif des deux segments l'un par rapport à l'autre dans le sens circonférentiel de l'anneau,
   caractérisé en ce que ledit au moins un moyen de liaison comprend en outre :
   - des moyens de rapprochement destinés à coopérer avec ledit flanc incliné pour rapprocher les deux extrémités mutuellement en regard des deux segments quand ledit élément mâle est partiellement engagé dans ladite partie femelle et quand ledit anneau est déplacé axialement d'une première position en regard de ladite gorge de montage jusqu'à une seconde position en regard de ladite surface sensiblement cylindrique.

Selon un mode de réalisation de l'invention, les moyens de rapprochement comprennent un mécanisme à levier comportant au moins deux biellettes de longueurs différentes qui sont articulées l'une à l'autre et chacune à une extrémité respective des deux segments à relier l'un à l'autre par des axes parallèles à l'axe géométrique de l'anneau, ledit mécanisme à levier agissant de façon à rapprocher l'une de l'autre les deux extrémités mutuellement en regard des deux segments quand ledit élément mâle est partiellement engagé dans ladite partie femelle et quand une articulation commune à deux biellettes du mécanisme à levier est déplacée sensiblement radialement par rapport au centre de l'anneau.

D'autres objets, caractéristiques et avantages de l'invention ressortiront mieux au cours de la description suivante de divers modes de réalisation donnés à titre d'exemple en référence aux dessins annexés sur lesquels :
- la figure 1 montre, de manière schématique, une section axiale ou section méridienne d'une roue de véhicule équipée d'un appui de sécurité ayant un anneau segmenté selon un premier mode de réalisation de l'invention ;
- la figure 2 est une vue de côté de l'appui de sécurité à anneau segmenté, dans un état replié permettant l'introduction de l'appui de sécurité dans l'espace intérieur d'un pneumatique dont au moins un des deux talons est dégagé du siège correspondant sur la jante de la roue ;
- la figure 3 est une vue de côté, à plus grande échelle, d'un des segments de l'anneau de l'appui de sécurité de la figure 2 ;
- la figure 4 est une vue du segment de la figure 3 suivant la flèche F de cette figure ;
- la figure 5 est une vue de côté d'une première biellette faisant partie d'un mécanisme à levier reliant deux segments successifs de l'anneau de l'appui de sécurité ;
- la figure 6 est une vue en coupe suivant la ligne VI-VI de la figure 5 ;
- la figure 7 est une vue de dessus d'une seconde biellette faisant partie dudit mécanisme à levier ;
   la figure 8 est une vue en coupe suivant la ligne VIII-VIII de la figure 7 ;
- la figure 9 est une vue en coupe suivant la ligne IX-IX de la figure 8 ;
- la figure 10 montre un clip utilisable comme élément de maintien temporaire pour le montage de l'appui de sécurité sur la jante de la roue ;
- les figures 11 à 14 sont des vues de côté de l'appui de sécurité à anneau segmenté, correspondant à des phases successives au cours du serrage de l'anneau sur la jante de la roue ;
- les figures 15 à 17 sont des vues partielles montrant, à plus grande échelle, un détail de l'anneau segmenté, dans des états correspondant respectivement aux phases des figures 12 à 14 ;
- la figure 18 est une section axiale ou section méridienne de la roue de la figure 1 au cours d'une des étapes de montage de l'appui de sécurité sur la jante de la roue ;
- la figure 19 est une section axiale ou section méridienne d'un élément gonflable de blocage de talon de pneumatique utilisable dans la roue de la figure 1 ;
- la figure 20 est une vue semblable à la figure 1 montrant une autre forme de réalisation des éléments gonflables de blocage de talon ;
- la figure 21 est une vue en élévation latérale d'un raccord tubulaire utilisable pour la fabrication des éléments gonflables de blocage de talon montrés dans la figure 20 ;
- la figure 22 est une vue en coupe suivant la ligne XXII-XXII de la figure 21 ;
- la figure 23 est une section axiale ou section méridienne d'une roue de véhicule équipée d'un appui de sécurité à anneau segmenté selon un second mode de réalisation de l'invention ;
- la figure 24 est une vue partielle montrant un mécanisme à trois biellettes utilisable pour relier deux segments successifs d'un anneau segmenté d'un appui de sécurité selon l'invention ;
- la figure 25 montre, à plus grande échelle, une partie du mécanisme à trois biellettes de la figure 24.

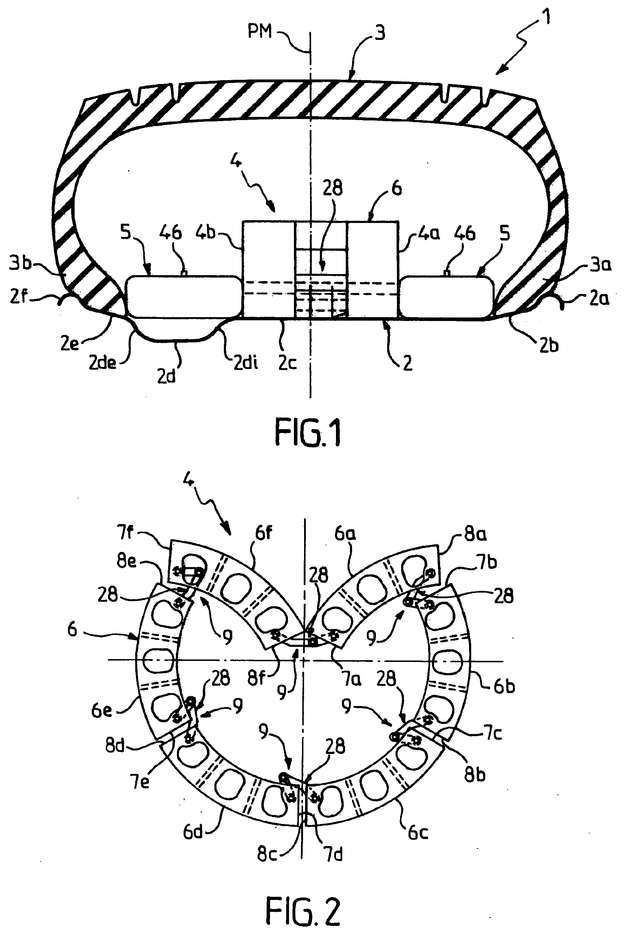

En se reportant à la figure 1, on peut voir, en section axiale ou section méridienne, une roue de véhicule 1 comportant une jante 2 sur laquelle sont montés un pneumatique 3 et un appui de sécurité 4.

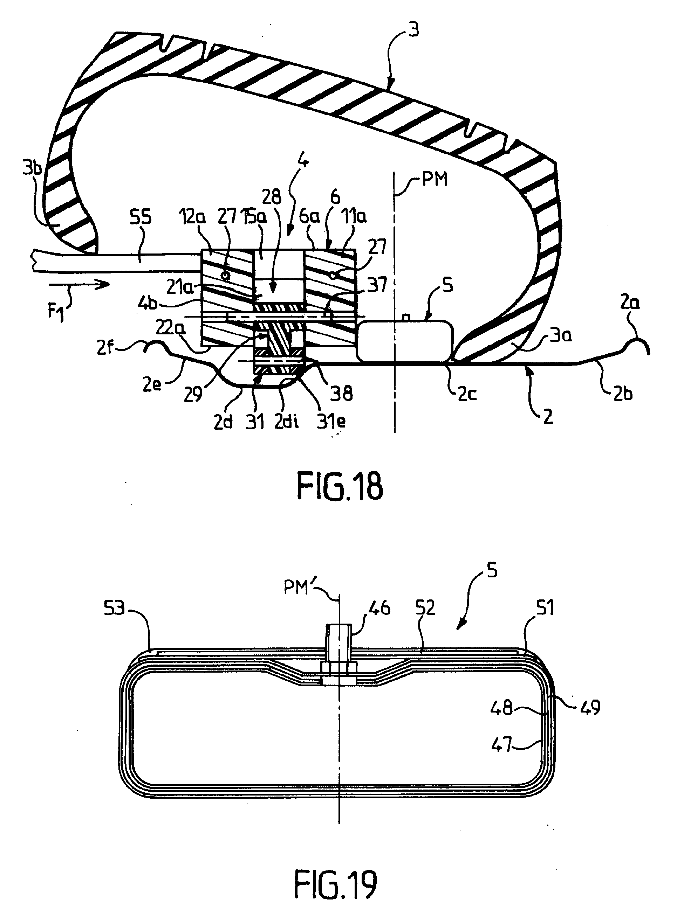

Dans la figure 1 (de même que dans les figures 18, 20 et 23), le côté droit de la figure correspond au côté intérieur de la roue 1, c'est-à-dire le côté qui, en service, est tourné vers la carrosserie du véhicule, tandis que le côté gauche de la figure correspond au côté extérieur de la roue 1, c'est-à-dire le côté qui est tourné vers l'extérieur du véhicule.

La jante 2 représentée sur la figure 1 a un profil de jante usuelle qui comporte successivement du côté intérieur vers le côté extérieur, c'est-à-dire du côté droit vers le côté gauche de la figure, un rebord intérieur 2a en forme de crochet, un siège intérieur 2b pour le talon intérieur 3a du pneumatique 3, une partie 2c, cylindrique ou sensiblement cylindrique, qui supporte l'appui de sécurité 4, une gorge de montage 2d dont le flanc intérieur 2di se raccorde de manière douce à la partie 2c et dont le flanc extérieur 2de se raccorde à un siège 2e pour le talon extérieur 3b du pneumatique 3, et un rebord extérieur 2f en forme de crochet. La jante représentée sur la figure 1 a une largeur relativement grande, comme cela est par exemple le cas pour les véhicules poids lourds, les véhicules de sport ou à caractère sportif ou certains véhicules haut de gamme.

Dans la figure 1, l'appui de sécurité 4 a une largeur sensiblement plus petite que celle de la jante 2. Dans ce cas, au moins un, par exemple deux éléments de blocage de talon 5 sont aussi montés sur la jante 2, de part et d'autre de l'appui de sécurité 4, entre la face latérale intérieure 4a ou extérieure 4b dudit appui de sécurité 4 et le talon correspondant intérieur 3a ou extérieur 3b du pneumatique 3. Deux exemples de réalisation des éléments de blocage 5 seront décrits en détail plus loin.

Le ou les éléments de blocage de talon 5 ne sont pas absolument indispensables et l'on peut s'en passer dans certains cas, en particulier lorsque la jante 2 a une largeur relativement faible comme cela est par exemple le cas pour certains véhicules légers. Un exemple de roue sans élément de blocage de talon sera également décrit plus loin.

La figure 2 montre, à l'état replié, un appui de sécurité 4 du type à anneau segmenté selon un premier mode de réalisation de l'invention. L'anneau 6 de l'appui de sécurité 4 comporte plusieurs segments arqués, par exemple six segments 6a à 6f comme montré sur la figure 2. Tous les segments 6a à 6f peuvent être identiques comme montré dans la figure 2 et, dans ce cas, ils ont une longueur correspondant à un arc de 60°.

Toutefois, l'invention n'est bien entendu pas limitée à un appui de sécurité dont l'anneau est subdivisé en six segments identiques. L'anneau peut en effet comporter un nombre de segments plus grand ou plus petit que six, par exemple deux ou trois segments comme dans le cas de l'appui de sécurité décrit dans le document EP-A-0 798 141, et les segments peuvent avoir des longueurs égales ou des longueurs différentes comme cela est connu.

Cependant, comme les segments de l'anneau de l'appui de sécurité sont généralement réalisés en une matière synthétique (matière plastique ou matière élastomère éventuellement renforcée de fibres, par exemple en polyamide), il est préférable, pour des raisons de réduction du coût de fabrication, que tous les segments de l'anneau 6 soient identiques et aient la même longueur, car un seul moule peut alors suffire pour fabriquer l'anneau de l'appui de sécurité. De même, il est préférable que l'anneau 6 comporte au moins trois segments, car cela permet de le mettre dans un état replié qui facilite l'insertion de l'appui de sécurité dans le pneumatique 3 ou l'enlèvement de l'appui de sécurité hors dudit pneumatique quand au moins le talon extérieur 3b du pneumatique 3 est dégagé du siège extérieur 2e de la jante 2.

Les segments 6a à 6f de l'anneau 6 de l'appui de sécurité ont des extrémités 7a, 8a, 7b, 8b, ... 7f, 8f, respectivement, qui, en service, sont deux à deux mutuellement en regard, comme par exemple les extrémités 8c et 7d. Les extrémités mutuellement en regard des segments 6a à 6f sont reliées les unes aux autres par des moyens de liaison 9. De préférence, tous les moyens de liaison 9 sont identiques et l'un d'eux sera décrit en détail plus loin.

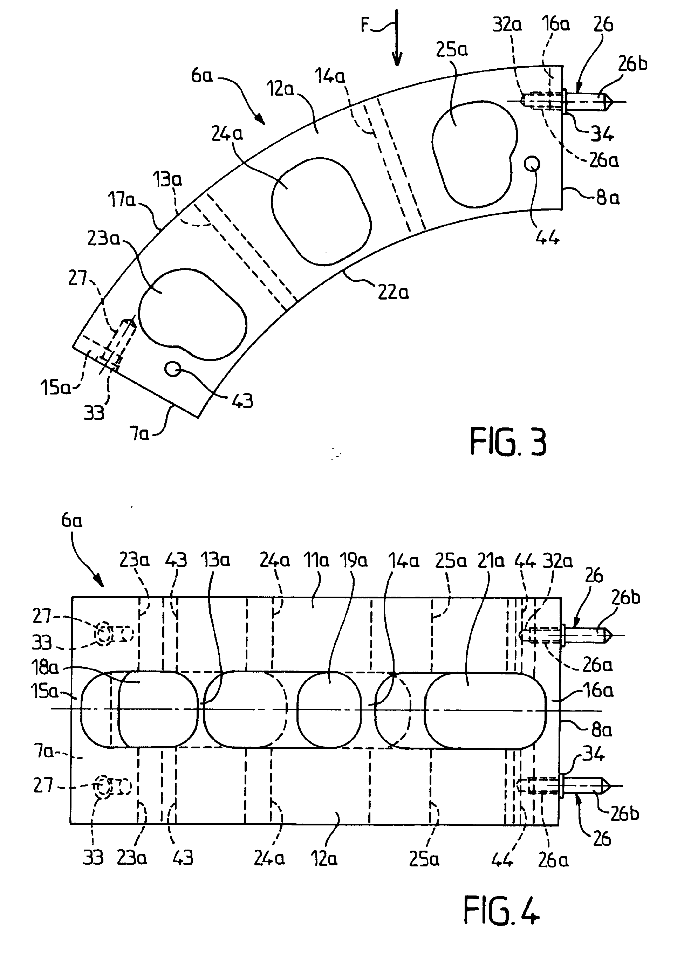

Etant donné que dans l'exemple de réalisation représenté sur la figure 2, tous les segments 6a à 6f de l'anneau 6 de l'appui de sécurité 4 sont identiques et que tous les moyens de liaison 9 sont identiques, on ne décrira ci-après en détail que le segment 6a en faisant référence aux figures 3 et 4. Comme montré dans ces figures, le segment 6a, réalisé par exemple en Nylon 6/6 (marque déposée), comporte deux parties latérales 11a et 12a, respectivement intérieure et extérieure, qui s'étendent parallèlement l'une à l'autre et qui sont entretoisées par deux cloisons radiales 13a et 14a et, près des extrémités 7a et 8a, par des barrettes 15a et 16a.

De préférence, les cloisons 13a et 14a ont une dimension radiale correspondant à celle des parties latérales 11 a et 12a du segment 6a, tandis que les deux barrettes 15a et 16a ont une dimension radiale plus petite que celle du segment 6a et se trouvent à proximité immédiate de la surface périphérique extérieure 17a du segment 6a, c'est-à-dire la surface dudit segment qui est la plus éloignée de la jante 2. Il est ainsi formé trois alvéoles 18a, 19a et 21a (figure 4) entre les deux parties latérales 11 a et 12a du segment 6a. Chacune des deux alvéoles d'extrémité 18a et 21a débouche, sous la forme de fentes, à la fois dans la face d'extrémité correspondante 7a ou 8a du segment 6a et dans la surface périphérique intérieure 22a dudit segment 6a, c'est-à-dire dans sa surface de base destinée à venir en contact avec la jante 2.

En outre, comme montré dans les figures 3 et 4, des lumières 23a, 24a et 25a sont formées deux à deux en vis-à-vis dans les parties latérales 11a et 12a du segment 6a. Les alvéoles 18a, 19a et 21a et les lumières 23a, 24a et 25a permettent à la fois de réaliser des économies de matière et, en service, elles permettent d'assurer une ventilation du segment correspondant 6a lorsque, en cas de crevaison, la roue 1 roule sur le sol par l'intermédiaire de l'appui de sécurité 4.

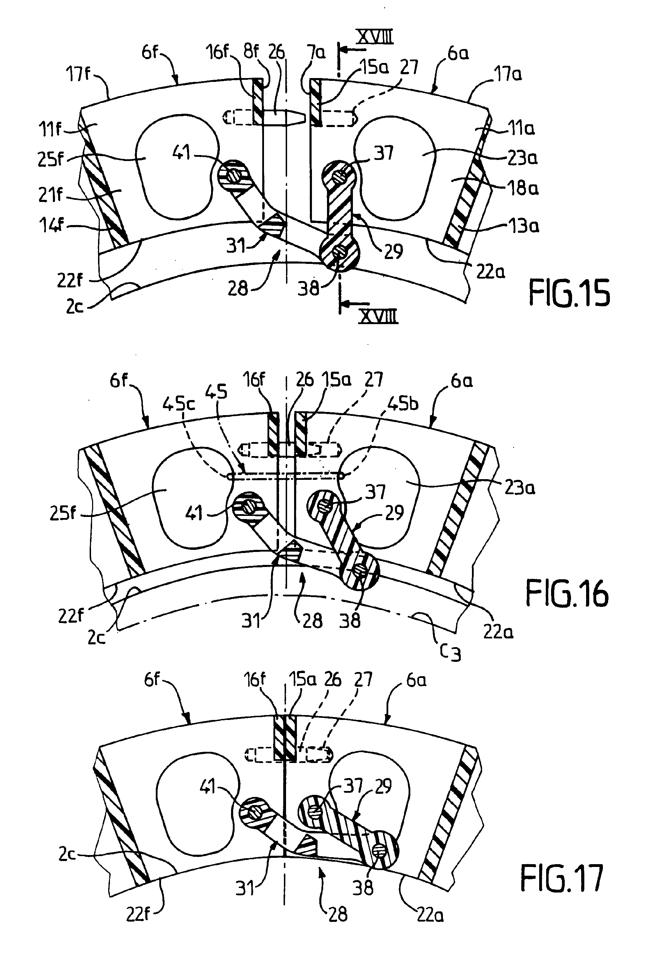

Comme indiqué plus haut, les autres segments 6b à 6f de l'anneau 6 de l'appui de sécurité 4 ont une structure identique à celle du segment 6a. C'est pourquoi, dans les figures 15 à 17, les parties du segment 6f qui correspondent à celles du segment 6a sont désignées par les mêmes numéros de référence affectés de la lettre f.

Chaque moyen de liaison 9 comprend au moins un élément mâle 26 et au moins une partie femelle 27 (non montrés dans la figure 2, mais visibles dans les figures 3, 4 et 11 à 17), ainsi qu'un mécanisme à levier 28 comportant au moins deux biellettes 29 et 31 de longueurs différentes.

Plus précisément, chacun des segments 6a à 6f de l'anneau 6 de l'appui de sécurité 4 comporte de préférence deux éléments mâles 26 qui sont fixés sur l'une de ses faces d'extrémité, par exemple la face 8a comme montré dans les figures 3 et 4 pour le segment 6a, et deux parties femelles 27 qui sont formées dans l'autre face d'extrémité du segment, par exemple la face 7a comme montré dans les figures 3 et 4. Chaque partie femelle est apte à recevoir un élément mâle correspondant 26 porté par la face d'extrémité adjacente d'un autre segment de l'anneau 6, par exemple la face d'extrémité 8f du segment 6f comme montré dans les figures 15 à 17.

Chaque élément mâle 26 peut être constitué par exemple par une cheville en acier comportant une partie filetée 26a qui est vissée dans un trou taraudé 32a dans la face d'extrémité 8a du segment 6a, et une partie cylindrique lisse 26b, à extrémité conique ou tronconique, qui peut être engagée de manière glissante dans une des deux parties femelles 27 du segment suivant, par exemple le segment 6b suivant le segment 6a. Chaque partie femelle 27 peut être constituée par un trou borgne, cylindrique et lisse, qui est formé dans la face d'extrémité 7a du segment 6a lors du moulage de celui-ci. A l'entrée de chaque trou borgne 27, peut être prévu un lamage 33 apte à recevoir un collet 34 porté par l'élément mâle correspondant 26 à la jonction entre sa partie filetée 26a et sa partie lisse 26b. A titre de variante, chaque partie femelle 27 pourrait être constituée par un insert métallique en forme de douille, encastré ou noyé dans la face d'extrémité 7a du segment 6a.

Bien entendu, le nombre des éléments mâles 26 portés par chaque segment 6a à 6f n'est pas limité à deux, mais peut être plus petit ou plus grand que deux selon la valeur de la largeur du segment, c'est-à-dire selon la largeur de l'appui de sécurité 4, mesurée dans une direction parallèle à l'axe de rotation de la roue 1.

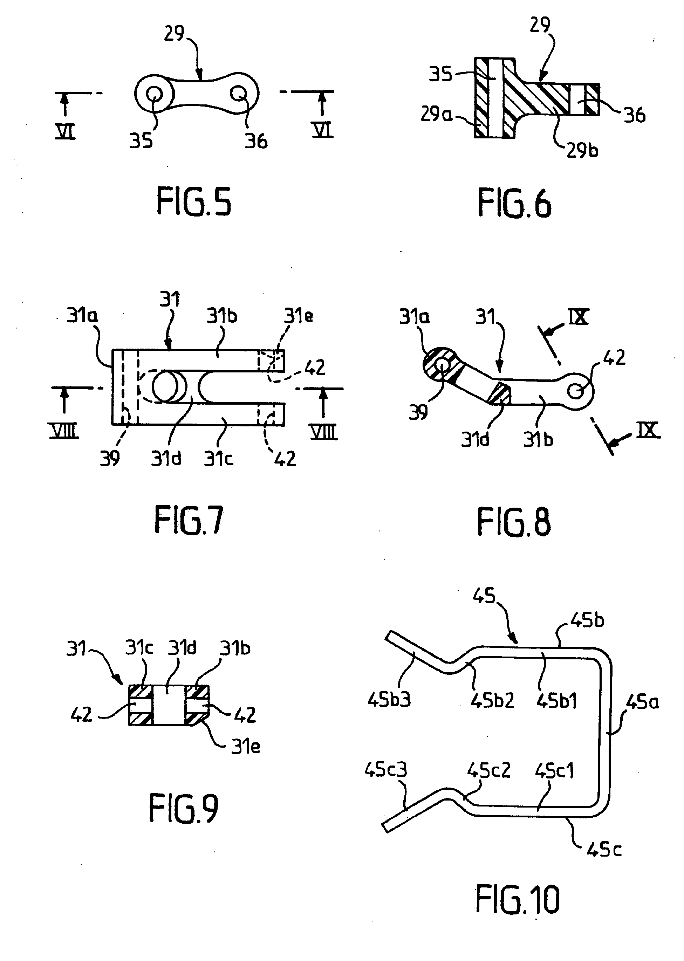

Chaque mécanisme à levier 28 comporte de préférence deux biellettes 29 et 31, par exemple moulées en une matière plastique telle que le Nylon 6/6, qui sont représentées en détail dans les figures 5 à 9. Comme montré dans la figure 5, la biellette 29 a, vue de côté, sensiblement la forme d'un maillon de chaîne de vélo, avec deux trous cylindriques 35 et 36 respectivement pour des axes d'articulation 37 et 38 (figures 15 à 17). Cependant, vue en coupe par un plan passant par les axes géométriques des deux trous 35 et 36 et indiqué par la ligne VI-VI dans la figure 5, la biellette 29 a une forme générale en T comme montré dans la figure 6, avec une partie large 29a autour du trou 35 et une partie étroite 29b dans la partie restante de la biellette 29.

Comme montré dans la figure 7, la biellette 31 a une forme générale en U, avec une partie de base 31 a et deux branches 31 b et 31c. De préférence, les deux branches 31 b et 31 c sont entretoisées par une barrette 31 d qui est d'un seul tenant avec les deux branches. Un trou cylindrique 39 est formé dans la partie de base 31a de la biellette 31 pour un axe d'articulation 41 (figures 15 à 17) et deux trous mutuellement alignés 42 sont formés près des extrémités libres des branches 31 b et 31c pour recevoir l'axe d'articulation 38 susmentionné qui est commun aux deux biellettes 29 et 31.

La partie large 29a de la biellette 29 et la biellette 31 ont la même largeur et la valeur de cette largeur correspond à celle de la largeur de la fente formée entre les deux parties latérales 11a et 12a du segment 6a comme montré dans la figure 18, ou à la largeur de la fente formée entre les parties latérales 11 f et 12f du segment 6f, pour ce qui concerne la partie de la biellette 31 qui se trouve entre ces deux dernières parties latérales dans le cas des deux biellettes 29 et 31 reliant les segments 6a et 6f.

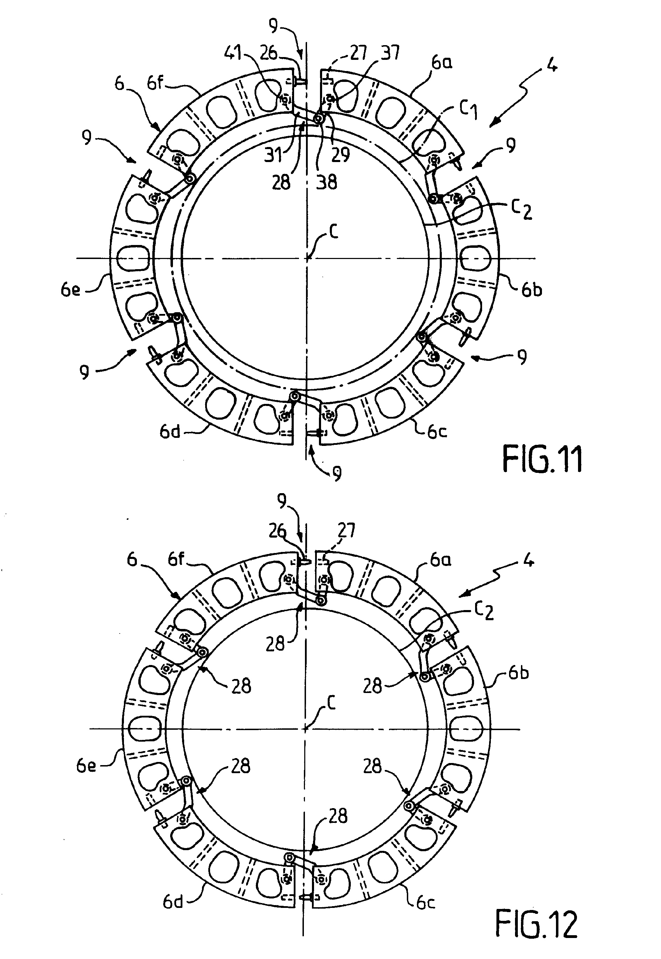

Comme on peut le voir dans les figures 11 à 14 et comme cela est encore mieux visible dans les figures 15 à 17, les deux biellettes 29 et 31 de chaque mécanisme à levier 28 sont articulées l'une à l'autre par l'axe d'articulation 38 qui est enfilé dans les trous cylindriques alignés 36 et 42 des biellettes 29 et 31 ; la biellette 29 est articulée à une extrémité d'un des segments, par exemple le segment 6a, au moyen de l'axe d'articulation 37 dont les extrémités sont logées dans des trous cylindriques alignés 43 formés dans les parties latérales 11a et 12a du segment 6a près de l'extrémité 7a de celui-ci ; et la biellette 31 est articulée à l'extrémité d'un autre segment, par exemple le segment 6f, au moyen de l'axe 41 dont les extrémités sont logées dans des trous alignés 44 formés dans les parties latérales 11f et 12f du segment 6f, près de l'extrémité 8f de celui-ci.

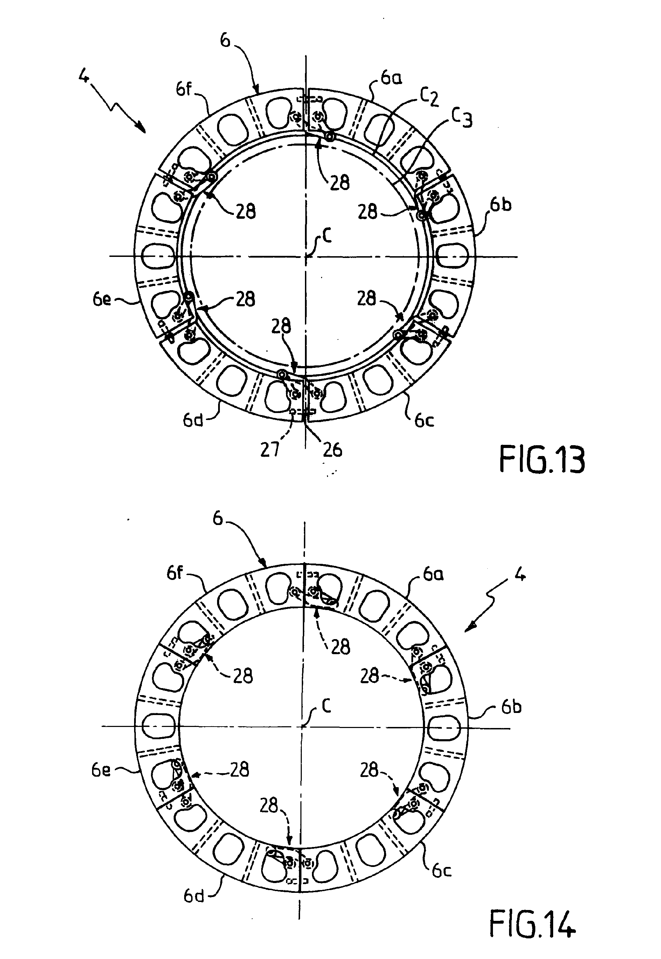

Les positions des trous 43 et 44 sur les segments 6a à 6f et les longueurs des biellettes 29 et 31 des mécanismes à levier 28 sont choisies de telle façon que :
a) quand les biellettes 29 et 31 sont déployées dans une position comme celle montrée sur la figure 11, l'articulation commune aux deux biellettes 29 et 31 de tous les mécanismes à levier 28 se trouve à une distance du centre C de l'anneau 6 de l'appui de sécurité 4 qui est plus grande que le rayon du cercle C₁ (montré en traits mixtes dans la figure 11) qui correspond au diamètre maximal du rebord extérieur 2f de la jante 2 ;
b) quand les biellettes 29 et 31 se trouvent dans un état replié comme par exemple celui montré dans les figures 13 et 16 et quand tous les éléments mâles sont partiellement engagés dans les parties femelles 27, l'articulation commune aux deux biellettes 29 et 31 de tous les mécanismes à levier 28 se trouve dans l'espace intérieur défini par l'anneau 6 de l'appui de sécurité 4, à une distance du centre C dudit anneau qui est plus petite que le rayon du cercle C₂ (figure 13) correspondant au diamètre de la partie cylindrique 2c de la jante 2, mais plus grande que le rayon du cercle C₃ (montré en traits mixtes dans la figure 13) qui correspond au diamètre du fond de la gorge 2d de la jante 2 ;
c) quand les deux biellettes 29 et 31 de tous les mécanismes à levier 28 sont dans un état complètement replié comme montré dans les figures 14 et 17, lesdites biellettes 29 et 31 sont entièrement logées dans les fentes formées entre les parties latérales 11 et 12 des segments de l'anneau 6 de l'appui de sécurité 4, les faces d'extrémité mutuellement en regard des segments 6a à 6f sont en contact ou presque en contact les unes avec les autres et l'anneau 6 de l'appui de sécurité a un diamètre minimal tel que les surfaces de base 22a à 22f des segments 6a à 6f puissent être appliquées contre la surface extérieure de la partie cylindrique ou sensiblement cylindrique 2c de la jante 2.

Comme on peut le voir sur la figure 8, les branches 31b et 31c de la biellette 31 sont cintrées afin de ne pas interférer avec la partie large 29a de la biellette 29 quand les biellettes sont dans la position montrée sur les figures 14 et 17. En outre, comme montré dans la figure 9, la branche 31 b de la biellette 31 a une surface extérieure biseautée dans la région de l'articulation commune aux deux biellettes 29 et 31 qui est définie par les trous 36 et 42 et par l'axe d'articulation 38. La surface biseautée 31e peut être formée par un méplat, mais elle a de préférence une forme conique.

Plus précisément, la surface biseautée 31 e est formée sur la branche 31 b de la biellette 31 dans une région qui fait face au flanc intérieur 2di de la gorge 2d de la jante 2 au cours des opérations de montage de l'appui de sécurité 4 sur ladite jante, comme montré dans la figure 18. Dans ces conditions, lorsque l'anneau 6 de l'appui de sécurité 4 est soumis à une force dirigée parallèlement à l'axe géométrique de l'anneau, comme indiqué par la flèche F1 dans la figure 18, la surface biseautée 31e de chaque biellette 31 vient en contact avec le flanc intérieur 2di de la gorge 2d et l'articulation commune aux deux biellettes 29 et 31 de chaque mécanisme à levier 28 est alors soumise à une force ayant une composante dirigée radialement vers l'extérieur qui tend à déplacer ladite articulation commune radialement vers l'extérieur par rapport au centre C de l'anneau 6. Il en résulte que les deux biellettes 29 et 31 de chaque mécanisme à levier 28 passent de l'état représenté sur la figure 16 à l'état représenté sur la figure 17, provoquant ainsi un rapprochement des extrémités des segments de l'anneau 6 comme montré sur la figure 17 et, par suite, une réduction du diamètre intérieur de l'anneau 6. En conséquence, tout en venant se placer autour de la partie cylindrique ou sensiblement cylindrique 2c de la jante 2, l'anneau 6 se resserre autour de la jante 2 et les surfaces de base 22a à 22f des segments 6a à 6f viennent s'appliquer contre ladite partie cylindrique ou sensiblement cylindrique 2c de la jante.

L'appui de sécurité 4 peut comporter en outre au moins un élément de maintien 45 (figure 10), de préférence six éléments de maintien dans le cas où l'anneau 6 comporte six segments 6a à 6f. Au cours du montage de l'appui de sécurité 4 sur la jante 2 de la roue 1, les éléments de maintien 45 servent à maintenir temporairement les segments 6a à 6f de l'anneau 6 dans un état de rapprochement partiel dans lequel les éléments mâles 26 de chaque segment sont partiellement engagés dans les parties femelles 27 du segment adjacent correspondant, comme on le verra plus loin.

Comme montré dans la figure 10, chaque élément de maintien 45 peut être constitué par un clip en un matériau à ressort, par exemple en fil d'acier à ressort. Le clip 45 est conformé de manière à présenter une forme générale en U, avec une partie de base 45a et deux branches 45b et 45c qui ont successivement, partant de la partie de base 45a, des parties mutuellement parallèles 45b1 et 45c1 suivies de parties mutuellement convergentes 45b2 et 45c2, qui sont enfin suivies par des parties d'extrémité mutuellement divergentes 45b3 et 45c3. Les parties 45b1 et 45c1 des deux branches 45b et 45c ont une longueur correspondant approximativement à la largeur de la partie latérale arquée de chaque segment de l'anneau 6 (par exemple la partie latérale arquée 12a du segment 6a). La longueur de la partie de base 45a du clip 45 est choisie de telle façon que, lorsque les deux branches 45b et 45c du clip sont engagées, par exemple, respectivement dans la lumière 23a du segment 6a et dans la lumière 25f du segment 6f, comme montré dans la figure 16, les deux branches 45b et 45c maintiennent un jeu prédéfini entre les faces d'extrémité 7a et 8f des segments 6a et 6f. Le jeu prédéfini susmentionné a une valeur plus petite que la longueur de la partie lisse 26b des éléments mâles 26 qui font saillie sur la face d'extrémité 8f du segment 6f. Par exemple, le jeu prédéfini peut avoir une valeur de 12 mm.

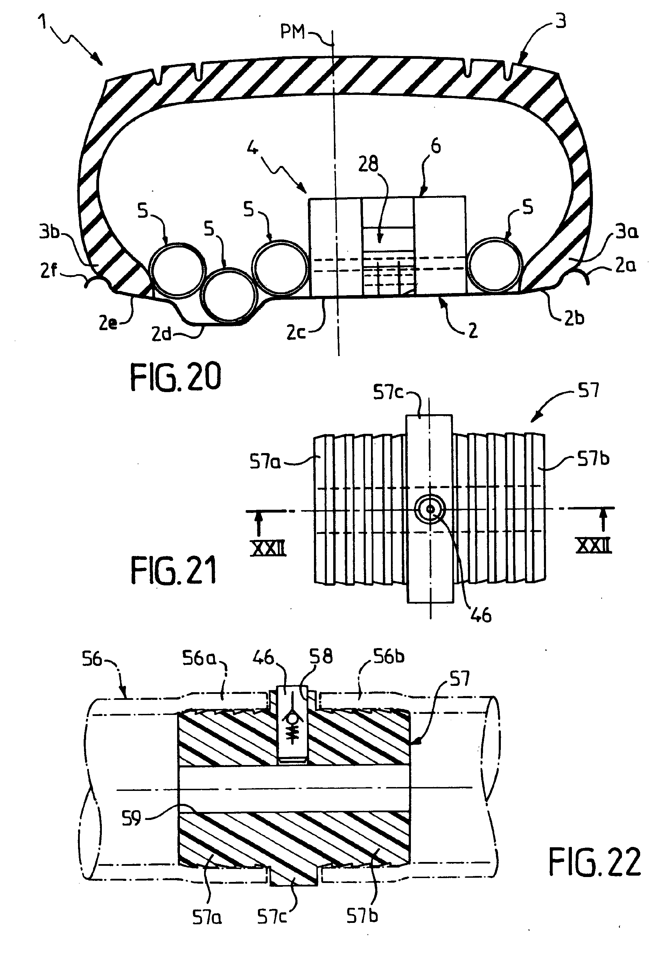

Les deux éléments de blocage de talon 5 représentés dans la figure 1 peuvent avoir la même largeur ou sensiblement la même largeur dans le cas où l'appui de sécurité 4 doit être placé sur la jante 2 dans une position centrée ou approximativement centrée par rapport au plan médian PM de la roue 1, comme montré dans la figure 1. Toutefois, les deux éléments de blocage de talon 5 peuvent avoir des largeurs notablement différentes dans le cas où l'anneau 6 de l'appui de sécurité 4 doit être installé sur la jante 2 dans une position nettement décentrée par rapport au plan médian PM, comme par exemple dans la position montrée sur la figure 20.

Cependant, dans tous les cas, les éléments de blocage de talon 5 peuvent avoir la forme d'un anneau à structure tubulaire semi-rigide, qui est muni d'une valve 46 permettant le gonflage de l'anneau à structure tubulaire en présence d'un gaz comprimé dans le pneumatique 3 de la roue 1, et empêchant le dégonflage dudit anneau à structure tubulaire lorsqu'il se produit une chute rapide de pression dans le pneumatique 3. La valve 46 est tarée pour s'ouvrir par exemple lorsque la différence de pression entre la pression à l'extérieur de la structure tubulaire de l'élément de blocage de talon 5, donc la pression à l'intérieur du pneumatique 3, et la pression à l'intérieur de ladite structure tubulaire de l'élément 5 dépasse 0,1 bar (10⁴ Pa).

Chaque élément de blocage de talon 5 en forme d'anneau peut avoir une section méridienne de forme rectangulaire à angles arrondis, comme montré dans les figures 1 et 19. De préférence, la structure tubulaire de l'élément de blocage de talon 5 a des parois présentant une structure multicouche, comme montré dans la figure 19.

Par exemple, la structure multicouche peut comporter successivement, de l'intérieur vers l'extérieur de la structure tubulaire, une nappe intérieure de gomme d'étanchéité 47 à fort module d'élasticité, entourée par une nappe 48 armée de fils orientés obliquement, par exemple à + 27° par rapport au plan médian PM' de la section méridienne de la structure tubulaire, et d'une nappe 49 armée de fils orientés obliquement et croisés par rapport aux fils de la nappe 48, par exemple suivant un angle de -27° par rapport au plan médian PM'. Sur sa paroi périphérique extérieure qui porte la valve 46, la structure multicouche comporte en outre une nappe 51 armée de fils orientés à 90° par rapport au plan médian PM', qui est elle-même frettée par une nappe 52 armée de fils métalliques orientés à 0° par rapport au plan médian PM'. Enfin, la structure multicouche est recouverte d'une nappe extérieure de gomme de protection 53. La nappe extérieure de frettage 52 a pour but de diminuer les effets de la force centrifuge sur la paroi périphérique extérieure de la structure tubulaire de l'élément de blocage de talon 5 et elle a également pour but d'empêcher ou de limiter la déformation de ladite paroi périphérique extérieure radialement vers l'extérieur sous l'effet de la pression du gaz (air) à l'intérieur de l'élément de blocage de talon 5 quand la pression à l'intérieur du pneumatique 3 a fortement chuté, par exemple à cause d'une crevaison. En outre, la nappe extérieure de frettage 52, dont les fils d'armature sont inextensibles, a un diamètre plus grand que celui du rebord 2f de la jante 2, afin que l'élément de blocage de talon 5 puisse être mis en place sur ladite jante.

On notera également que la structure multicouche décrite ci-dessus permet à l'élément de blocage de talon 5 de se déformer radialement vers l'intérieur sous l'effet de la pression intérieure afin de remplir au moins partiellement dans la gorge 2d de la jante 2, tout en acceptant également un accroissement de la dimension transversale de l'élément de blocage de talon 5, c'est-à-dire de sa dimension mesurée parallèlement à l'axe de rotation de la roue 1, afin de bien bloquer le talon correspondant 3a ou 3b du pneumatique 3 contre le rebord correspondant 2e ou 2f de la jante 2.

On va maintenant décrire l'opération de montage du pneumatique 3 et de l'appui de sécurité 4 sur la jante 2. Tout d'abord, alors que le pneumatique 3 est couché par exemple sur le sol, l'anneau 6 de l'appui de sécurité est placé manuellement dans l'état représenté sur la figure 2 et il est introduit à l'intérieur de la cavité du pneumatique 3. Ensuite, l'anneau 6 de l'appui de sécurité 4 est développé à l'intérieur du pneumatique 3 de façon à le mettre dans un état semblable à celui représenté sur la figure 11, dans lequel les biellettes 29 et 31 de tous les mécanismes à levier 28 sont déployées pour que l'anneau 6 ait un diamètre maximal dans la cavité du pneumatique 3.

Ensuite, la jante 2 de la roue est fixée, si cela n'avait pas déjà été fait, au porte-jante d'un appareil classique de montage/démontage de pneumatique. Ensuite, le pneumatique 3 est placé axialement en face de la jante 2 de telle façon que le talon intérieur 3a du pneumatique se trouve sensiblement en face du rebord extérieur 2f de la jante 2. Ensuite, en utilisant les commandes usuelles de l'appareil de montage/démontage de pneumatique, le talon intérieur 3a du pneumatique est engagé par-dessus le rebord extérieur 2f de la jante 2 et il est placé sur la partie 2c de ladite jante dans une position intermédiaire correspondant sensiblement au plan médian PM.

Ensuite, l'élément 5 destiné au blocage du talon intérieur 3a est introduit à l'intérieur de la cavité du pneumatique 3 en le faisant passer entre le rebord extérieur 2f de la jante 2 et le talon extérieur 3b du pneumatique 3, puis en le faisant passer entre la jante 2 et l'anneau 6 pour le faire ensuite glisser sur la partie 2c de la jante 2 jusqu'à ce que ledit élément 5 vienne en contact avec le talon intérieur 3a du pneumatique 3. Ensuite, l'anneau 6 est placé dans une position axiale, par rapport à la jante 2, telle que les biellettes 29 et 31 de tous les mécanismes à levier 28 se trouvent en regard de la gorge 2d de ladite jante 2.

Ensuite, les segments 6a à 6f de l'anneau 6 sont rapprochés manuellement deux à deux de manière successive et progressive en commençant par exemple par les deux segments qui se trouvent dans la partie basse de la roue, par exemple les segments 6d et 6c de la figure 12, et, après rapprochement de ces segments, en faisant tourner l'anneau 6 d'environ 60° pour pouvoir procéder au rapprochement de deux autres segments, par exemple les segments 6e et 6d. Les opérations manuelles de rapprochement mutuel des segments 6a à 6f sont poursuivies jusqu'à ce que tous les éléments mâles 26 des segments soient partiellement engagés dans les parties femelles 27 des segments adjacents correspondants. Au cours de ces opérations, il peut être judicieux, en particulier si les segments 6a à 6f ont individuellement un poids relativement important, de placer temporairement des clips comme le clip 45 montré sur la figure 10, afin d'empêcher les segments de s'écarter les uns des autres sous l'effet de leur propre poids lorsque l'on fait tourner l'anneau 6. A la fin des opérations manuelles de rapprochement décrites ci-dessus, l'anneau 6 se trouve dans un état tel que celui représenté sur les figures 13 et 16.

Ensuite, un outil 55, appelé bêche (partiellement montré dans la figure 18), qui fait partie de l'outillage usuel de l'appareil de montage/démontage de pneumatique et qui peut être déplacé à la fois radialement et axialement par rapport au porte-jante dudit appareil, est mis en contact avec la face extérieure 4b de l'appui de sécurité 4. La dimension de la bêche 55, mesurée dans une direction correspondant au sens circonférentiel de l'anneau 6 est plus grande que le jeu prédéfini susmentionné entre les segments de l'anneau 6.

Ensuite, le porte-jante de l'appareil de montage/démontage de pneumatique est mis en rotation de manière à faire tourner la jante 2 autour de l'axe de rotation de la roue, puis ou bien le porte-jante est déplacé axialement vers la bêche 55, ou bien cette dernière est déplacée axialement vers le porte-jante de manière à pousser axialement l'anneau 6 et par suite aussi l'élément de blocage de talon 5 et le talon intérieur 3a vers le rebord intérieur 2a de la jante 2. Au cours de ce mouvement axial relatif entre la jante 2 et l'anneau 6 de l'appui de sécurité 4, la surface biseauté 31 e des biellettes 31 des mécanismes à levier 28 entre en contact avec le flanc intérieur 2di de la gorge 2d de la jante 2. Comme cela a déjà été indiqué plus haut, il en résulte que l'articulation commune aux deux biellettes 29 et 31 de chaque mécanisme à levier 28 est soumise à une force ayant une composante dirigée radialement vers l'extérieur, qui a pour effet de faire passer les biellettes 29 et 31 de l'état représenté sur la figure 16 à l'état représenté sur la figure 17. Etant donné que, à ce moment, les segments 6a à 6f ne peuvent pas être déplacés radialement les uns par rapport aux autres du fait que les éléments mâles 26 sont engagés dans les parties femelles 27, il en résulte que le déplacement radial, vers l'extérieur, de l'articulation commune des biellettes 29 et 31 provoque le rapprochement mutuel final des segments 6a à 6f de l'anneau 6 et, par suite, le resserrement de celui-ci autour de la partie cylindrique 2c de la jante 2. Le mouvement axial relatif entre le porte-jante et la bêche 55 de l'appareil de montage/démontage de pneumatique est poursuivi jusqu'à ce que l'anneau 6 de l'appui de sécurité 4 se trouve dans la position axiale voulue sur la partie cylindrique ou sensiblement cylindrique 2c de la jante 2, et que le talon intérieur 3a du pneumatique 3 soit en contact avec le rebord intérieur 2a de la jante 2.

Ensuite, si des clips 45 avaient été utilisés, ils sont enlevés.

Ensuite, on écarte légèrement axialement la bêche 55 de la face extérieure 4b de l'appui de sécurité 4, pour écarter le talon extérieur 3b du pneumatique du rebord extérieur 2f de la jante 2 en laissant juste la place pour introduire le second élément de blocage de talon 5. Ce second élément de blocage de talon 5 est alors introduit progressivement à la main dans la cavité du pneumatique 3 en le faisant passer entre le rebord extérieur 2f de la jante 2 et le talon extérieur 3b du pneumatique 3, tout en faisant tourner pas à pas la jante 2 à l'aide du porte-jante rotatif de l'appareil de montage/démontage de pneumatique. Ensuite, la bêche 55 est enlevée, puis le talon extérieur 3b du pneumatique est mis en place de manière classique sur le siège extérieur 2e de la jante 2 en le faisant passe par-dessus le rebord 2f de ladite jante à l'aide d'outils appropriés de l'appareil de montage/ démontage de pneumatique.

Après cela, un contrôle visuel est effectué pour vérifier si le pneumatique 3 a été correctement monté sur la jante 2, puis la roue 1 est éventuellement soumise à une opération d'équilibrage et à une opération de gonflage pour gonfler le pneumatique 3 et en même temps les éléments de blocage de talon 5.

Avec l'appui de sécurité 4 selon l'invention, dans le cas d'une roue pour un véhicule poids lourd, les opérations de montage de l'appui de sécurité 4, des éléments de blocage de talon 5 et du pneumatique 3 sur la jante 2 demande moins d'une quinzaine de minutes (sans compter les éventuelles opérations d'équilibrage et de gonflage) c'est-à-dire un temps sensiblement moins long que celui qui est nécessaire pour le montage d'un appui de sécurité classique du type à anneau segmenté.

Les opérations de démontage de l'appui de sécurité 4 s'effectuent de la manière suivante. Tout d'abord, le talon extérieur 3b du pneumatique 3 est dégagé du siège extérieur 2e de la jante 2 de manière classique à l'aide d'outils appropriés d'un appareil de montage/démontage de pneumatique.

Ensuite, un galet conique faisant partie de l'outillage usuel de l'appareil de montage/démontage de pneumatique est placé en contact avec le flanc du pneumatique 3 qui se trouve du côté intérieur de la roue 1 (le côté droit sur la figure 1). Ensuite, le porte-jante de l'appareil de montage/ démontage de pneumatique est mis en rotation et il est déplacé axialement par rapport au galet susmentionné et/ou ledit galet est déplacé axialement par rapport au porte-jante, de manière à faire glisser le talon intérieur 3a du pneumatique 3, l'élément de blocage de talon intérieur 5, l'anneau 6 de l'appui de sécurité et l'élément de blocage de talon extérieur 5 axialement vers l'extérieur. Ensuite, dès que l'élément de blocage de talon extérieur 5 passe au dessus du rebord extérieur 2f de la jante 2, on l'extrait manuellement. Ensuite, on poursuit le déplacement axial du talon intérieur du pneumatique et de l'élément de blocage de talon intérieur 5 sur la partie cylindrique ou sensiblement cylindrique 2c de la jante 2 vers le rebord extérieur 2f de celle-ci jusqu'à ce que les biellettes 29 et 31 des mécanismes à levier 28 se trouvent en regard de la gorge 2d de la jante 2.

A ce moment, les biellettes 29 et 31 sont libres de pivoter autour de leurs axes 37 et 41 pour que leur articulation commune (axe 38) pénètre dans la gorge 2d de la jante 2, permettant ainsi aux segments 6a à 6f de s'écarter les uns des autres. Ensuite, la rotation du porte-jante de l'appareil de montage/démontage de pneumatique est arrêtée et, si nécessaire, les éléments mâles 26 des segments de l'anneau 6 sont complètement sortis des parties femelles correspondantes 27 en introduisant un outil approprié, par exemple un tournevis, entre les extrémités mutuellement en regard desdits segments et en se servant du tournevis comme levier pour les séparer les uns des autres. Dans ces conditions, l'anneau 6 peut être mis dans un état tel que celui représenté sur la figure 11, après quoi l'anneau 6 et le pneumatique 3 peuvent être enlevés de la jante 2 avec l'élément de blocage de talon 5 restant, puis l'anneau 6 et ledit élément 5 peuvent être extraits de la cavité du pneumatique 3 sans problème. Là encore, les opérations de démontage de l'appui de sécurité peuvent être exécutées plus simplement et plus rapidement que dans le cas d'un appui de sécurité connu du type à anneau segmenté.

La figure 20 montre une autre forme de réalisation de l'invention dans laquelle l'appui de sécurité 4 est décentré par rapport au plan médian PM de la roue 1 et déporté vers le côté intérieur de cette dernière. La figure 20 montre également une autre forme de réalisation des éléments de blocage de talon 5. Il est ici prévu quatre éléments de blocage de talon 5 qui ont chacun la forme d'un tore à section méridienne circulaire.

Dans ce cas, chaque élément de blocage de talon 5 peut être par exemple constitué par un morceau de tuyau 56 en une matière élastomère armée, dont les deux extrémités 56a et 56b sont reliées l'une à l'autre par un raccord tubulaire 57 (figures 21 et 22). Comme montré, le raccord 57 comporte deux embouts mâle 57a et 57b qui sont respectivement emboîtés dans les extrémités correspondantes 56a et 56b du tuyau 56 et qui ont une surface extérieure dont le profil longitudinal a une forme semblable à des dents de scie. Les dents sont conformées et orientées de façon à favoriser l'emboîtement de chaque embout 57a ou 57b dans l'extrémité correspondante 56a ou 56b du tuyau 56 et à empêcher ou tout au moins freiner l'extraction de chaque embout hors de l'extrémité correspondante du tuyau. Les deux extrémités 56a et 56b du tuyau 56 peuvent être fixées respectivement aux embouts 57a et 57b par exemple par collage et/ou par frettage. Entre les deux embouts 57a et 57b, le raccord 57 comporte un collet 57c. Un trou 58 s'étend radialement dans le collet 57c et débouche dans le canal intérieur 59 du raccord 57. Une valve 46, analogue à la valve décrite plus haut, est fixée dans le trou 58 pour permettre le remplissage de la cavité interne du tuyau 56 avec de l'air comprimé.

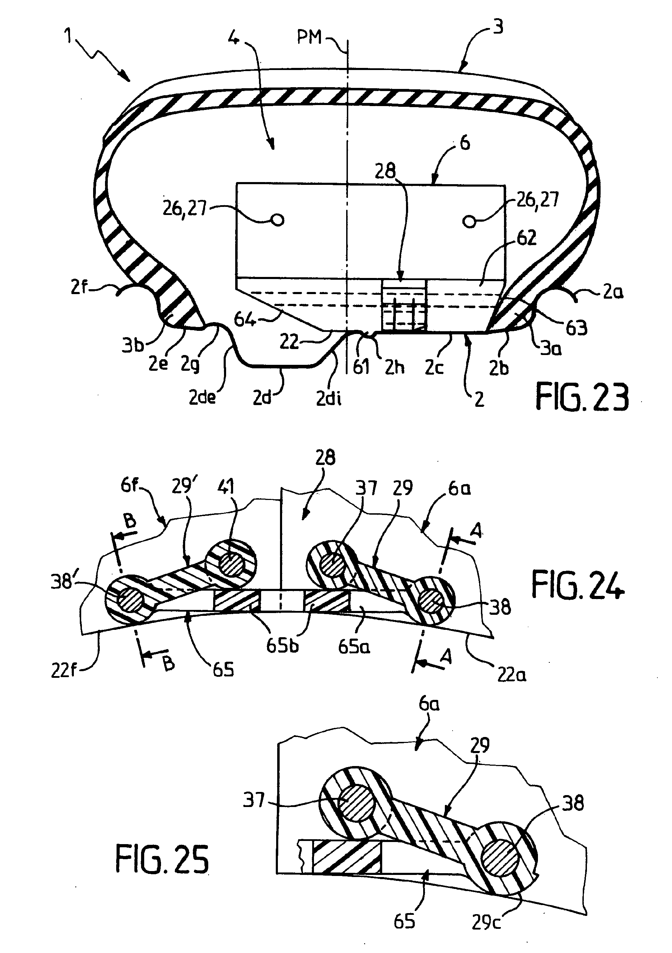

La figure 23 montre une autre forme de réalisation de l'appui de sécurité 4 selon l'invention, qui est utilisable dans le cas d'une jante ayant une largeur plus faible que celle représentée dans les figures 1 et 20 et qui est plus particulièrement destinée à une roue pour un véhicule léger. Dans ce cas, la jante 2 comporte, entre le flanc extérieur 2de de la gorge 2d et le siège extérieur 2e, un bossage anti-décoincement 2g, encore appelé « hump » par les hommes de l'art, pour maintenir le talon extérieur 3b du pneumatique 3 sur le siège extérieur 2e et en contact avec le rebord extérieur 2f de la jante 2.

En outre, la partie cylindrique ou sensiblement cylindrique 2c de la jante 2 comporte, à proximité du flanc intérieur 2di de la gorge 2d, une rainure de clipsage 2h, peu profonde, qui a par exemple une section transversale semi-circulaire. Chaque segment de l'anneau 6 de l'appui de sécurité 4 présente, sur sa surface de base 22, une saillie de clipsage 61 qui est engagée dans la rainure de clipsage 2h quand l'anneau 6 de l'appui de sécurité 4 occupe une position axiale désirée par rapport à la jante 2, afin de maintenir ledit anneau 6 dans ladite position axiale désirée. Dans cette position axiale désirée, chaque segment de l'anneau 6 prend appui par sa face côté intérieur contre le talon intérieur 3a du pneumatique 3, afin de maintenir ledit talon 3a sur le siège 2b de la jante 2 et contre le rebord intérieur 2a de ladite jante. A cet effet, la partie de base 62 de chaque segment de l'anneau 6 peut comporter, du côté intérieur de la roue 1, une surface latérale intérieure biseautée 63.

On notera que la saillie de clipsage 61 peut être réalisée sous la forme d'une nervure s'étendant de façon continue dans le sens circonférentiel de l'anneau 6 sur tout ou partie de la longueur de chaque segment 6a à 6f dudit anneau 6. En variante, ladite saillie de clipsage peut être réalisée sous la forme d'une série de bossages, par exemple en forme de calottes sphériques, espacés dans le sens circonférentiel de l'anneau 6.

Selon une autre variante, la saillie de clipsage 61, c'est-à-dire la nervure ou la série de bossages, peut être portée par la surface sensiblement cylindrique 2c de la jante 2, tandis que la rainure de clipsage 2h peut être formée dans la surface de base 22a, ... 22f des segments 6a, ... 6f de l'anneau 6 de l'appui de sécurité.

Dans le mode de réalisation de la figure 23, chaque segment de l'anneau 6 de l'appui de sécurité 4 a une largeur telle qu'il s'étend dans la direction axiale de la roue 1 sensiblement jusqu'à la transition entre le flanc extérieur 2de de la gorge 2d et le bossage anti-décoincement 2g et recouvre donc entièrement ou presque entièrement la gorge 2d. Dans ces conditions, afin de permettre au talon extérieur 3b du pneumatique 3 de pénétrer au moins localement dans la gorge 2d de la jante 2 pour permettre le démontage dudit pneumatique, la partie de base 62 de chaque segment de l'anneau 6 de l'appui de sécurité 4 est fortement biseautée comme indiqué en 64 dans la figure 23.

Pour le reste, l'anneau 6 de l'appui de sécurité 4 montré sur la figure 23 peut être réalisé d'une manière semblable à celle décrite plus haut à propos du mode de réalisation des figures 1 à 18 (excepté les éléments de blocage de talon 5 qui, dans ce cas, sont absents). En particulier, les segments de l'anneau 6 sont assemblés les uns aux autres par des éléments mâles 26 et des parties femelles 27 et par des mécanismes à levier 28 tout à fait semblables à ceux qui ont été décrits plus haut.

Dans les modes de réalisation qui ont été décrits plus haut, chaque mécanisme à levier 28 comportait deux biellettes 29 et 31. Toutefois, l'invention ne doit pas être limitée à des mécanismes comportant deux biellettes, car, pour atteindre le but qui est à la base de la présente invention, on peut tout aussi bien utiliser un mécanisme comportant par exemple trois biellettes, comme le mécanisme 28 représenté sur la figure 24 qui correspond partiellement à la figure 17 du premier mode de réalisation.

Dans la figure 24, les éléments qui sont identiques ou qui jouent le même rôle que ceux de la figure 17 sont désignés par les mêmes numéros de référence et ne seront pas décrits à nouveau en détail. Comme montré sur la figure 24, le mécanisme 28 comporte deux biellettes 29 et 29' identiques et de même longueur, qui sont articulées respectivement par les axes 37 et 41 chacune à une extrémité respective de deux segments de l'anneau de l'appui de sécurité, par exemple les segments 6a et 6f, et une troisième biellette 65, plus longue que les deux biellettes 29 et 29' et articulée à celles-ci respectivement par les axes 38 et 38'.

Chacune des deux biellettes 29 et 29' peut avoir une forme identique à celle montrée sur la figure 6. La biellette 65 a globalement une forme en H, avec deux branches parallèles 65a, dont une seule est visible sur la figure 24 et qui sont entretoisées par une ou deux traverses 65b. Chacune des deux articulations définies respectivement par les axes 38 et 38' constitue une articulation commune entre la biellette 29 et la biellette 65 ou entre la biellette 29' et la biellette 65 et ces deux articulations communes jouent le même rôle que l'articulation commune définie par l'axe d'articulation 38 entre les deux biellettes 29 et 31 du premier mode de réalisation. C'est-à-dire que lorsque les deux articulations communes définies par les axes 38 et 38' sont déplacées radialement de l'intérieur vers l'extérieur de l'anneau de l'appui de sécurité, les segments dudit anneau sont rapprochés les uns des autres afin de réduire le diamètre de l'anneau et de resserrer celui-ci pour l'appliquer sur la surface cylindrique ou sensiblement cylindrique de la partie 2c de la jante 2.

De préférence, la biellette 65 a, vue en coupe selon la ligne A-A et selon la ligne B-B de la figure 24, une forme semblable à celle montrée dans la figure 9, c'est-à-dire que l'une des branches parallèles 65a de la biellette 65 a, à ses deux extrémités, une surface biseautée semblable à la surface biseautée 31e montrée dans la figure 9, afin de faciliter le glissement des extrémités de la biellette 65 le long du flanc intérieur 2di de la jante 2 lors de la mise en place de l'appui de sécurité 4 sur la partie 2c de ladite jante.

En outre, comme montré dans la figure 25, la biellette 29 (comme aussi la biellette 29') peut avoir dans la région de l'articulation commune définie par l'axe 38 (ou par l'axe 38' pour la biellette 29') une surface extérieure courbe 29c qui a un profil en spirale ou qui est décentrée par rapport à l'axe 38. De cette manière, le serrage des segments de l'anneau 6 de l'appui de sécurité 4 peut être amplifié par un effet de came donné par la surface 29c de la biellette 29 en contact avec la jante lorsque la biellette 29 pivote autour de l'axe 37.

Il va de soi que les modes de réalisation de l'invention qui ont été décrits ci-dessus ont été donnés à titre d'exemples purement indicatifs et nullement limitatifs, et que de nombreuses modifications peuvent être facilement apportées par l'homme de l'art sans pour autant sortir du cadre de l'invention.

Par exemple, dans le mode de réalisation de la figure 25, il n'est pas indispensable que les deux biellettes 29 et 29' soient de longueurs égales, bien que cela soit préférable pour des raisons de standardisation.

En outre, il n'est pas indispensable que tous les segments de l'anneau 6 soient reliés les uns aux autres par des moyens de liaison comportant d'une part des éléments mâles 26 et des parties femelles 27 et d'autre part un mécanisme à levier 28. En effet, au moins deux segments de l'anneau 6 pourraient être reliés l'un à l'autre en permanence par un moyen de liaison inextensible, mais élastiquement déformable, comme décrit et représenté par exemple sur les figures 17 et 18 du document EP-A-0 798 141 déjà mentionné, pourvu que l'anneau de sécurité comporte au moins deux segments reliés par des moyens de liaison incluant un mécanisme à levier tel que décrit plus haut.

En outre, dans certains cas, notamment lorsque l'anneau de l'appui de sécurité comporte un petit nombre de segments, il pourra être nécessaire de défaire l'un des axes d'articulation des biellettes de l'un des mécanismes à levier 28 afin d'ouvrir l'anneau et de permettre sa mise en place dans la cavité du pneumatique ou son retrait hors de la cavité du pneumatique par un déplacement de l'anneau ouvert selon une trajectoire sensiblement hélicoïdale.

## Revendications

1. Appui de sécurité pour supporter au moins partiellement une bande de roulement d'un pneumatique dans des conditions de pression faible ou nulle, comprenant un anneau (6) qui est destiné à être monté sur une jante (2) d'une roue (1) à l'intérieur d'un pneumatique (3) et qui est subdivisé en au moins deux segments arqués (6a,... 6f) ayant des extrémités (7a, 8f) qui se font mutuellement face, et plusieurs moyens de liaison (9) qui relient chacun deux extrémités mutuellement en regard de deux segments de l'anneau, au moins un desdits moyens de liaison (9) comprenant au moins un élément mâle (26) à une extrémité d'un segment (6f) et au moins une partie femelle (27) à une extrémité d'un autre segment (6a) et apte à recevoir ledit élément mâle par un déplacement relatif des deux segments (6a, 6f) l'un par rapport à l'autre dans le sens circonférentiel de l'anneau, **caractérisé en ce que** ledit au moins un moyen de liaison (9) comprend en outre des moyens de rapprochement aptes à rapprocher les deux extrémités mutuellement en regard des deux segments (6a, 6f) quand ledit élément mâle (26) est partiellement engagé dans ladite partie femelle (27), et en réponse à un déplacement axial dudit anneau (6) par rapport à la jante (2).

2. Appui de sécurité selon la revendication 1, **caractérisé en ce que** lesdits moyens de rapprochement comprennent un mécanisme à levier (28) comportant au moins deux biellettes (29, 31) de longueurs différentes qui sont articulées l'une à l'autre et chacune à une extrémité respective des deux segments (6a, 6f) à relier l'un à l'autre par des axes (37, 38, 41) parallèles à l'axe géométrique de l'anneau (6), ledit mécanisme à levier agissant de façon à rapprocher l'une de l'autre les deux extrémités mutuellement en regard (7a, 8f) des deux segments quand ledit élément mâle (26) est partiellement engagé dans ladite partie femelle (27) et quand une articulation (38) commune à deux biellettes du mécanisme à levier (28) est déplacée sensiblement radialement par rapport au centre (C) de l'anneau (6) en réponse audit déplacement axial de l'anneau.

3. Appui de sécurité selon la revendication 2, **caractérisé en ce que** dans un état où les extrémités (7a, 8f) des segments (6a, 6f) de l'anneau (6) sont écartées l'une de l'autre et l'anneau a un diamètre relativement grand, ladite articulation (38) commune à deux biellettes se trouve dans l'espace intérieur défini par l'anneau.

4. Appui de sécurité selon la revendication 2 ou 3,
**caractérisé en ce que** dans un état où les extrémités (7a, 8f) des segments (6a, 6f) de l'anneau (6) sont rapprochées l'une de l'autre et l'anneau a un diamètre relativement petit, les biellettes (29, 31) du mécanisme à levier (28) sont entièrement logées dans des fentes (18a, 21f) formées dans les extrémités mutuellement en regard des deux segments et dans une surface de base (22a, 22f) desdits segments qui est destinée à venir en contact avec la jante (2).

5. Appui de sécurité selon l'une quelconque des revendications 2 à 4, **caractérisé en ce qu'**une (31) des deux biellettes (29, 31) du mécanisme à levier (28) comporte, dans la région de ladite articulation commune (18), une surface extérieure (31e) biseautée de telle façon que lorsque l'anneau (6) est soumis à une force dirigée parallèlement à l'axe géométrique de l'anneau et que ladite surface extérieure biseautée (31e) vient en contact avec un flanc (2di) d'une gorge (2d) d'une jante de roue (2), ladite articulation commune (18) est soumise à une force tendant à la déplacer radialement vers l'extérieur par rapport au centre (C) de l'anneau (6).

6. Appui de sécurité selon l'une quelconque des revendications 2 à 5, **caractérisé par** au moins un élément de maintien (45) apte à maintenir temporairement ledit élément mâle (26) partiellement engagé dans ladite partie femelle (27) tant que ladite articulation commune (18) n'a pas été déplacée radialement pour serrer l'anneau (6) sur une jante de roue (2).

7. Appui de sécurité selon la revendication 6, **caractérisé en ce que** ledit élément de maintien (45) est constitué par un clip en matériau à ressort, qui a une forme générale en U, avec deux branches (45b, 45c) qui ont des parties mutuellement convergentes (45b2, 45c2) suivies de parties d'extrémité mutuellement divergentes (45b3, 45c3), et chacun des deux segments (6a, 6f) reliés par le mécanisme à levier (28) comporte, dans une face latérale, une lumière (23a, 25f) apte à recevoir une des deux branches du clip (45).

8. Appui de sécurité selon l'une quelconque des revendications 2 à 7, **caractérisé en ce que** le mécanisme à levier (28) comporte deux biellettes (29, 31).

9. Appui de sécurité selon l'une quelconque des revendications 2 à 7, **caractérisé en ce que** le mécanisme à levier (28) comporte trois biellettes (29, 29', 65), à savoir une première et une deuxième biellette (29 et 29'), articulées chacune à une extrémité respective des deux segments (6a, 6f) à relier l'un à l'autre, et une troisième biellette (65), plus longue que les première et deuxième biellettes et articulée à celles-ci.

10. Appui de sécurité selon l'une quelconque des revendications 2 à 9, **caractérisé en ce que** chaque segment (6a, ... 6f) de l'anneau (6) a une surface de base (22a, ... 22f) qui est apte à venir en contact avec une surface sensiblement cylindrique (2c) d'une jante de roue (2) et **en ce que** l'une de ladite surface de base (22a, ... 22f) et de ladite surface sensiblement cylindrique (2c) porte au moins une saillie (61) apte à s'encliqueter dans une rainure (2h) formée dans l'autre de ladite surface de base (22a, ... 22f) et de ladite surface sensiblement cylindrique (2c).

11. Roue de véhicule comprenant une jante (2), un pneumatique (3) et un appui de sécurité (4), **caractérisée en ce que** l'appui de sécurité (4) est un appui de sécurité selon l'une quelconque des revendications 1 à 10.

12. Roue de véhicule selon la revendication 11, **caractérisée par** au moins un élément de blocage de talon de pneumatique (5) qui est placé autour de la jante (2) entre une face latérale (4a ou 4b) de l'anneau (6) de l'appui de sécurité (4) et un talon (3a ou 3b) du pneumatique (3).

13. Roue de véhicule selon la revendication 12, **caractérisée en ce que** ledit élément de blocage de talon (5) a la forme d'un anneau à structure tubulaire semi-rigide, qui est muni d'une valve (46) permettant le gonflage de l'anneau à structure tubulaire en présence d'un gaz comprimé dans le pneumatique (3) de la roue (1), et empêchant le dégonflage dudit anneau à structure tubulaire lorsqu'il se produit une chute rapide de pression dans le pneumatique.

14. Ensemble composé d'une jante (2) de roue (1) et d'un appui de sécurité destiné à être monté sur ladite jante de roue à l'intérieur d'un pneumatique (3), la jante comprenant notamment une gorge de montage et une surface sensiblement cylindrique ayant un diamètre supérieur au diamètre de la gorge de montage et liée à celle-ci par un flanc incliné, ledit appui étant destiné à supporter au moins partiellement une bande de roulement du pneumatique dans des conditions de pression faible ou nulle et comprenant :
- un anneau (6) qui est subdivisé en au moins deux segments arqués (6a ... 6f) ayant des extrémités (7a, 8f) qui se font mutuellement face, et
- plusieurs moyens de liaison (9) qui relient chacun deux extrémités mutuellement en regard de deux segments de l'anneau,
• au moins un desdits moyens de liaison (9) comprenant
▷au moins un élément mâle (26) à une extrémité d'un segment (6f) et
▷au moins une partie femelle (27) à une extrémité d'un autre segment (6a) et apte à recevoir ledit élément mâle par un déplacement relatif des deux segments (6a, 6f) l'un par rapport à l'autre dans le sens circonférentiel de l'anneau,
**caractérisé en ce que** ledit au moins un moyen de liaison (9) comprend en outre :
- des moyens de rapprochement destinés à coopérer avec ledit flanc incliné pour rapprocher les deux extrémités mutuellement en regard des deux segments quand ledit élément mâle est partiellement engagé dans ladite partie femelle et quand ledit anneau est déplacé axialement d'une première position en regard de ladite gorge de montage jusqu'à une seconde position en regard de ladite surface sensiblement cylindrique.

15. Ensemble selon la revendication 14, dans lequel lesdits moyens de rapprochement comprennent un mécanisme à levier (28) comportant au moins deux biellettes (29, 31) de longueurs différentes qui sont articulées l'une à l'autre et chacune à une extrémité respective des deux segments (6a, 6f) à relier l'un à l'autre par des axes (37, 38, 41) parallèles à l'axe géométrique de l'anneau (6), ledit mécanisme à levier agissant de façon à rapprocher l'une de l'autre les deux extrémités mutuellement en regard (7a, 8f) des deux segments quand ledit élément mâle (26) est partiellement engagé dans ladite partie femelle (27) et quand une articulation (38) commune à deux biellettes du mécanisme à levier (28) est déplacée sensiblement radialement par rapport au centre (C) de l'anneau (6).
